# EUROPEAN PATENT APPLICATION

(11) **EP 0 897 179 A2**
(43) Date of publication of application: **17.02.1999**
(21) Application number: 98305721.7
(22) Date of filing: 17.07.1998
(51) Int. Cl.: G11B 27/30, G11B 20/12, G11B 5/008, G11B 27/10, G06F 3/06

(54) **System for locating data on tape**

(30) Priority: 13.08.1997 US 910684
(71) Applicant: Hewlett-Packard Company, Palo Alto, California 94304 (US)
(72) Inventor: Watkins, Mark R., Westbury Park, Bristol BS6 7SR (GB); Hilton, Richard L., Boise, Idaho 83713 (US)
(74) Representative: Colgan, Stephen James

(57) **Abstract**

A system for locating data while a tape is moving forward or backward. The system includes a backward header (86) comprising data configured for recording on tape (10) so that the data can be read when the tape (10) is moving backward. The system may also include a controller (28) configured to record and read the backward header (86). A memory device (44, 45 or 26) stores instructions that when executed cause a head (20) to read header information on the tape (10) when the tape (10) is moving backward. A memory device (44, 45 or 26) stores instructions that when executed cause the head (20) to record header information on the tape (10) so that the header information is readable when the tape (10) is moving backward. A memory device (44, 45 or 26) stores instructions that when executed cause a head (20) to record a forward header (82) on a first data track of the tape (10) and a backward header (86) on a second data track. The forward header (82) is readable when the tape (10) is moving forward (for that track) and the backward header (86) is readable when the tape (10) is moving backward (for that track). The memory device (44, 45 or 26) through which the invention is implemented may be, for example, circuitry in the tape drive controller (28), in an application specific integrated circuit, in the controller (28) system software or in the host computer (26) software.

## Description

### FIELD OF THE INVENTION

The invention relates generally to tape data storage and control systems, and more particularly, to a system for locating data while the tape is moving forward or backward.

### BACKGROUND OF THE INVENTION

Magnetic tape drives and tape cartridges are popular as fast, efficient and economical data storage mechanisms. Tapes are used primarily for routine backup of a computer hard disk memory and for offline file management tasks implemented between a computer hard disk and tape as data is processed. Data is transferred from the computer to the tape drive controller and then to the tape drive which uses a cartridge or cassette containing the tape. Streaming tape drives record data lengthwise along the tape. In a helical scan type streaming tape drive, data is recorded along the length of the tape in parallel stripes oriented diagonally across the width of the tape. Some streaming tape drives record data in only one direction. In this unidirectional recording, data is recorded simultaneously along as many parallel tracks as the tape, the magnetic head, and the drive electronics permit while the tape travels in one direction. Other streaming tape drives record data in two directions. In this bidirectional recording, data is recorded along one track while the tape travels in one direction. Upon reaching the end of one track on the tape, the drive selects a different track, reverses the direction of the tape, and records data on the newly selected track. The back and forth recording of data along a series of data tracks one at a time is known as serpentine recording.

Searching for and retrieving data stored on streaming tape cartridges is slow compared to disks and diskettes because the data is recorded serially along the data tracks. In the past, it was necessary to search the entire data string for a selected block of data. For example, in serpentine recording, if the read head of the tape drive happened to be on the first data track (track 0), but the selected data block was recorded on the seventh data track (track 6), then the tape drive would search each of the intervening data tracks in their entirety in sequential fashion to locate the selected data block. Thus, the drive would search track 0, and then track 1, and then track 2, and so on, until it found the selected data block on track 6. In unidirectional recording, the tape is rewound and then the data or positional information contained in headers and markers is read sequentially until the selected data is found.

Because the conventional search processes are comparatively slow, streaming tape drives are usually used as backup storage devices. One typical application is to copy the entire contents of a hard disk on a streaming tape cartridge. This backup application takes advantage of the large storage capacity of tape cartridges and avoids the disadvantage of long data retrieval times since the data is only being written to the tape and not read from the tape. In the unusual circumstance of a hard disk failure, the contents of the hard disk may be retrieved from the tape cartridge. Or, select data blocks may be retrieved from a tape under circumstances where a fast search is not particularly important.

The use of streaming tape drives only as backup storage devices, however, does not take full advantage of the large storage capacities of magnetic tape and the portable magnetic tape cartridges. A variety of different techniques have been developed to speed the search and retrieval capabilities of streaming tape drives. For example, U.S. Patent No. 4,858,039, issued to Mintzlaff and entitled Streaming Tape Drive With Direct Block Addressability, discloses a serpentine recording tape drive that can locate a selected data block without searching the length of the tape. The selected data block is located with a two part search. First, the magnetic head of the tape drive is moved vertically from one track to another until it locates a particular data track. This part of the search is performed by reading the block number of the data block to which the magnetic head is positioned and comparing that block number to the block number of the selected data block. If the numeric difference between the two block numbers exceeds a predetermined magnitude, the magnetic head is moved to a different track. The magnetic head then reads a data block on the new track and again compares its block number to the block number of the selected data block. This part of the search continues until a data block within a predetermined distance of the selected data block is found, or the distance from the selected data block is minimized. This first part of the search is nonsequential since the magnetic head does not pass over or read every sequentially recorded data block in moving from one track to another. The second part of the search is performed after the magnetic head has been positioned to a particular track. During the second part of the search, the magnetic head reads the block numbers of each recorded data block sequentially until it locates the selected data block.

In U.S. Patent No. 5,373,485, issued to Hogan et al and entitled Method For Locating Data In A Data Cartridge System, a two step search process is also used. In the first step, the search algorithm determines a target track number. After the head is moved to the target track, the tape is rewound to the beginning of that track and the track is read sequentially until the selected data block is found.

In U.S. Patent No. 5,485,321, issued to Leonhardt et al. and entitled Format And Method For Recording Optimization, data block markers, headers and the like are used to speed the search for and the retrieval of information from the tape. Like other methods for improving search and retrieval speeds, the header information in Leonhardt is read only in the forward direction of tape movement.

It would be desirable as a means to increase the speed with which tape drives can search and retrieve data during read operations, to read the markers, headers and other position and identification information when the tape is moving forward and when the tape is moving backward.

### SUMMARY OF THE INVENTION

The invention is directed to a system for locating data while a tape is moving forward or backward. The system includes a backward header having data configured for recording on tape so that the data can be read when the tape is moving backward. The system may also include a controller configured to record and read the backward header.

In one embodiment of the invention, a memory device stores instructions that when executed cause a head to read header information on the tape when the tape is moving backward. In another embodiment, the memory device stores instructions that when executed cause the head to record header information on the tape so that the header information is readable when the tape is moving backward. It is expected that backward headers will often be used with forward headers to increase search speeds. In this embodiment of the invention, the memory device stores instructions that when executed cause a head to record a forward header on a first data track of the tape and a backward header on a second data track. The forward header is readable when the tape is moving forward (for that track) and the backward header is readable when the tape is moving backward (for that track). The memory device through which the invention is implemented may be, for example, circuitry in the tape drive controller, in an application specific integrated circuit, in the controller system software or in the host computer software.

### DESCRIPTION OF THE DRAWINGS

Fig. 1 is a perspective view of a "half inch" tape drive and cartridge.

Fig. 2 is a perspective view of a "quarter inch" tape drive and cartridge.

Fig. 3 is a block diagram showing the interconnections between a tape drive, controller and host computer.

Fig. 4 is a perspective representation of a magnetic tape used in the tape drive and cartridge of Fig. 1.

Fig. 5 is a diagrammatic representation of a magnetic tape showing unidirectional parallel track recording over nine data tracks.

Fig. 6 is a diagrammatic representation of a magnetic tape showing serpentine recording over nine parallel data tracks.

Fig. 7 is a detail front elevation view of a nine channel magnetic read/write head for unidirectional recording over nine data tracks.

Fig. 8 is a detail front elevation view of a four channel magnetic read/write head for serpentine recording.

Fig. 9 is diagrammatic representation of a portion of magnetic tape showing data blocks and headers configured to be read when the tape is moving forward.

Fig. 10 is diagrammatic representation of a portion of magnetic tape showing data blocks and headers configured to be read when the tape is moving backward.

### DETAILED DESCRIPTION OF THE INVENTION

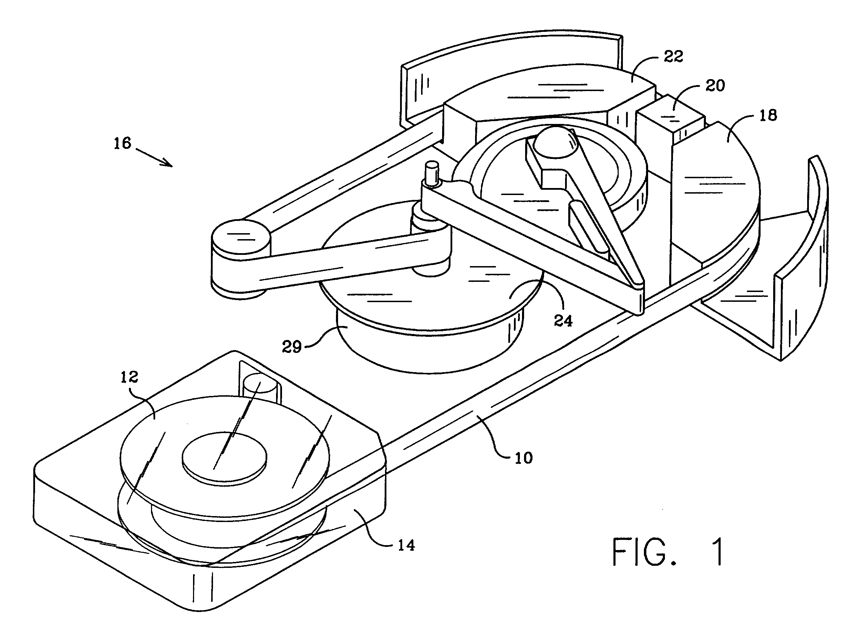

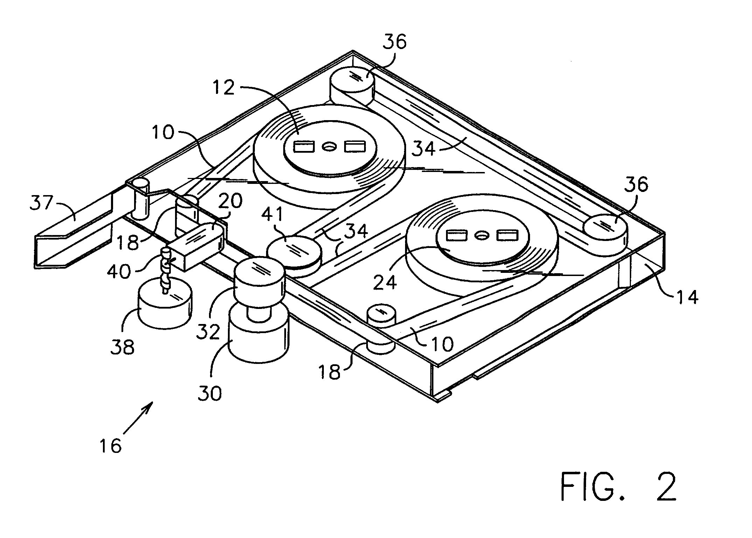

Figs. 1 and 2 illustrate generally two conventional magnetic tape systems that could be used with the present invention. The invention may be used with as well as the other various magnetic tape or other serial recording media systems. Therefore, "tape" as it is used herein is intended to be construed broadly to cover all of types of serial recording media.

Referring first to the "half inch" cartridge system of Fig. 1, magnetic tape 10 is wound on a single supply spool 12 in tape cartridge 14. Tape cartridge 14 is inserted into a tape drive 16 for read and write operations. Tape 10 passes around tape guide 18 over magnetic head 20, around tape guide 22 to take up spool 24. Supply spool 12 and take up spool 24 are driven by variable speed drive motors. Only the drive motor for the take up spool, indicated by reference number 29, is shown.

In the "quarter inch" tape drive system illustrated in Fig. 2, supply spool 12, take up spool 24 and tape 10 are all housed within tape cartridge 14. Cartridge 14 is inserted into tape drive 16, which includes the magnetic head 20, drive roller 32 and drive motor 30. A drive belt 34 is wound around slave roller 41 and drive belt rollers 36. Drive belt 34 contacts tape 10 on spools 12 and 24. A hinged door 37 automatically opens to allow magnetic head 20 to engage tape 10 when tape cartridge 14 is inserted into tape drive 16. Stepper motor 38 and lead screw 40 position magnetic head 20. Drive motor 30 rotates drive roller 32 against slave roller 41 to drive magnetic tape 10 across magnetic head 20 for reading and writing data on tape 10, or for rewinding and fast forwarding tape 10.

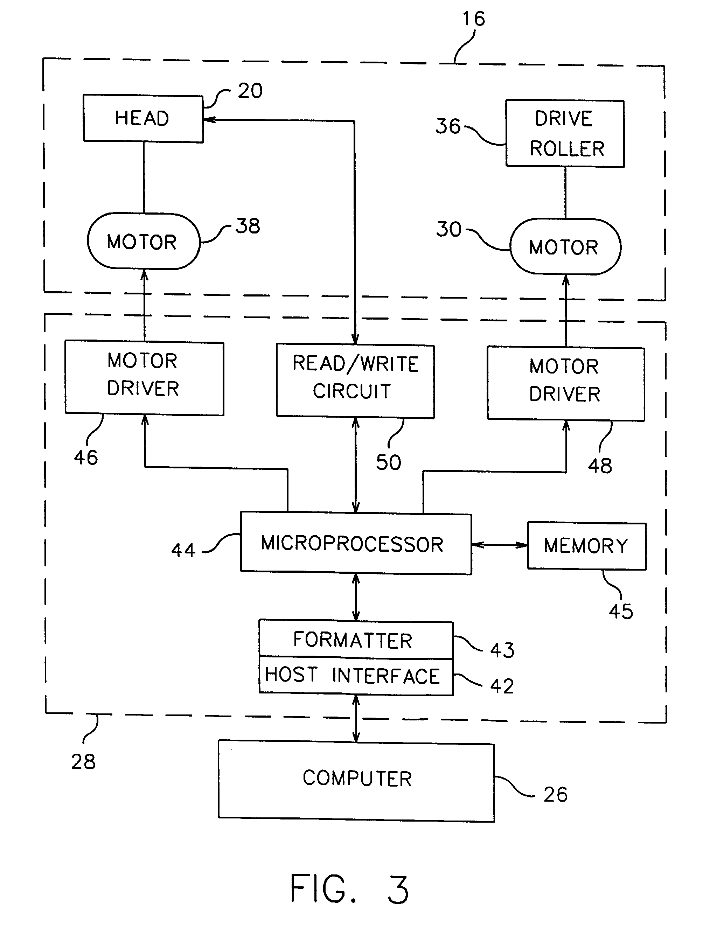

Fig. 3 is a block diagram that illustrates the interconnections between tape drive 16, a tape drive controller 28 and a host computer 26. Referring to Fig. 3, controller 28 controls the overall operation of tape drive 16. Controller 28 typically includes a host computer interface 42, formatter 43, microprocessor 44, a memory 45, a first motor driver 46 for stepper motor 38, a second motor driver 48 for tape drive motor 30 and a read/write circuit 50. In a write operation, computer 26 transmits a stream of data to controller 28 where the data is formatted for writing on tape 10. In a read operation, controller 28 retrieves the data selected by computer 26 from tape 10 and formats the data for reading by computer 26. For serpentine recording, controller 28 positions magnetic head 20 vertically over the appropriate track through stepper motor 38 via a first motor driver 46. Controller 28 controls the position of tape 10 through tape drive motor 30 via a second motor driver 48. Data is recorded on and read from tape 10 through read/write circuit 50. Computer interface 42, formatter 43, microprocessor 44, memory 45, motor drivers 46 and 48 and read/write circuit 50 represent generally conventional controller components that may be readily adapted for use with the present invention.

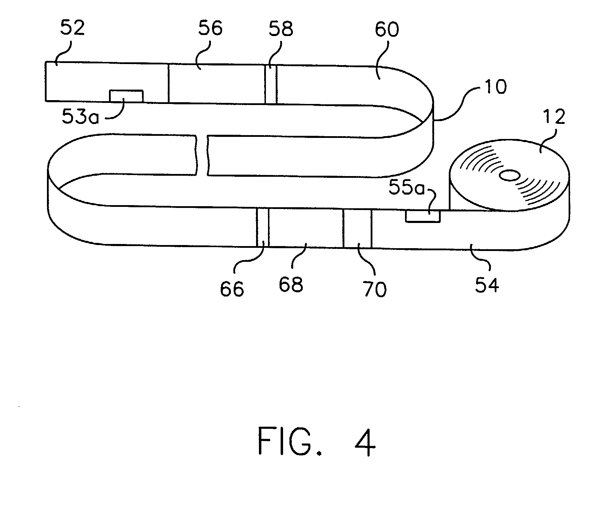

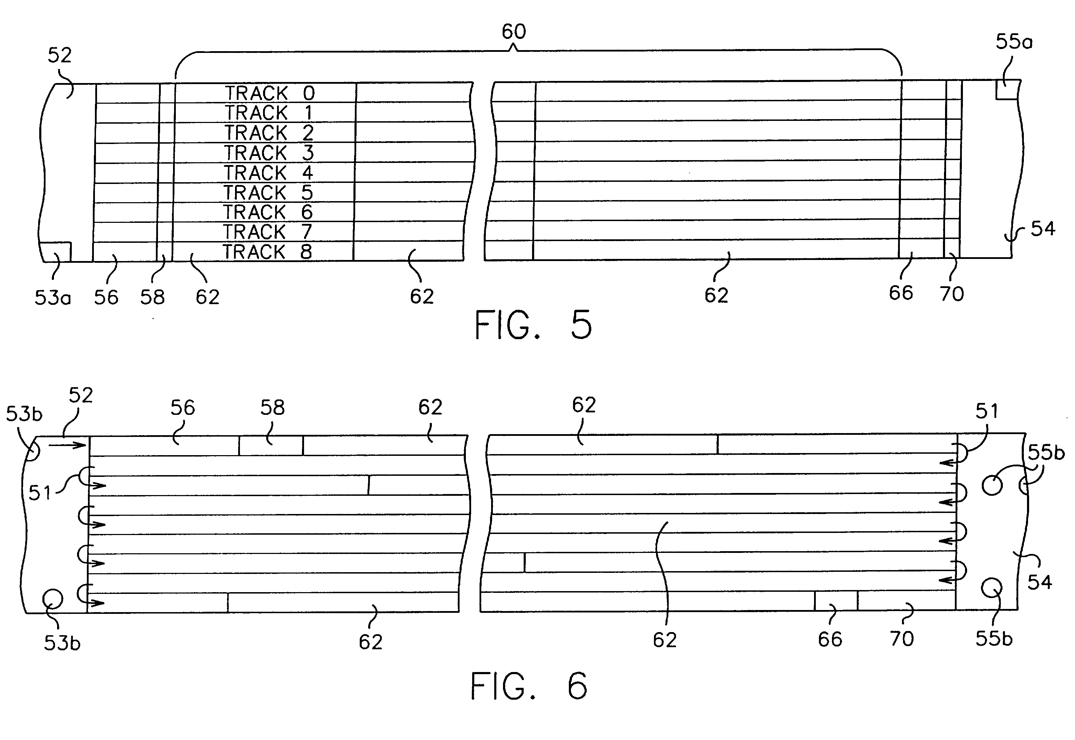

Fig. 4 illustrates a typical layout for magnetic tape 10. Fig. 5 illustrates tape 10 formatted for unidirectional recording along nine tracks sequentially over the length of tape 10. Fig. 6 illustrates tape 10 formatted for serpentine recording. In serpentine recording, tape 10 moves in a different direction for reading and writing on each of the tracks, as indicated by arrows 51. For example, tape 10 moves from left to right on the odd numbered tracks and from right to left on the even numbered tracks.

Referring to Figs. 4-6, tape 10 includes a leader section 52 at the beginning of the tape and a trailer section 54 at the end of the tape. Leader section 52 contains a marker identifying the beginning of the tape, such as reflector 53a in Fig. 5 or holes 53b in Fig. 6. Trailer section 54 contains a marker identifying the end of the tape, such as reflector 55a in Fig. 5 and holes 55b in Fig. 6. An identification and synchronization label 56 precedes a start of data marker 58 and the main data storage area 60. Label 56 may contain information about the physical characteristics of the tape and other administrative information, as well as an index or directory of the data blocks recorded on the tape and other search information. The end of main data storage area 60 is identified by end of data marker 66. A final end of tape marker 70 identifies the end of the data storage area on tape 10.

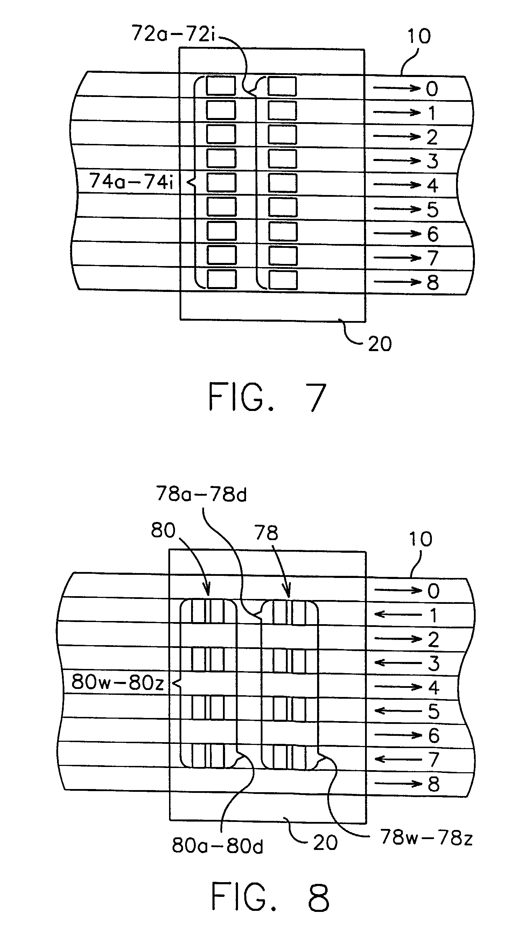

A typical magnetic head 20 for unidirectional recording on nine tracks is shown in Fig. 7. A typical magnetic head 20 for serpentine recording is shown in Fig. 8. Referring to Fig. 7, head 20 has nine read elements 72a-72i, nine write elements 74a-74i. Data is formatted and recorded simultaneously in data blocks across all of the tracks.

Referring to Fig. 8, for serpentine recording, magnetic head 20 has two sets 78 and 80 of four pairs of read and write elements 78a-78d (the read elements in set 78), 78w-78z (the write elements in set 78) and 80a-80d (the read elements in set 80), 80w-80z (the write elements in set 80) and a full width erase element 76. During any particular read or write operation, the read and write elements are positioned over one set of data tracks, the odd numbered tracks for example. When tape 10 passes from right to left for recording on the odd numbered tracks, the data is recorded serially along four tracks (tracks 1, 3, 5 an 7 in Fig. 8) with write elements 78w-78z in one set of elements and immediately read by read elements 80a-80d in the second set of elements to check the integrity of the newly written data. When tape 10 passes from left to right for recording on an even numbered track, magnetic head 20 moves vertically to reposition the read and write elements. Data is then recorded on the even numbered tracks by write elements 80w-80z and checked for accuracy by read elements 78a-78d.

The stream of data from computer 26 to controller 28 and tape drive 16 is sometimes accompanied by some type of user defined identification and separation or other formatting. This formatting may be the physical separation of the data into discrete packages or records, or some higher level logical organization of the data. Data received from the host computer may also be formatted by controller 28. While the user defined formatting may have some particular significance to the host computer, this significance may not be known to controller 28 and tape drive 16. Similarly, the controller defined formatting will usually be unknown to the host computer. Data records of varying length or groups of data records may be separated by comparatively simple file markers or more complex preambles or headers. Separation information or any other information that is used to identify or mark a data record or a group of data records is referred to in this Specification and in the Claims as a "header" or "header information." Headers may identify, for example, the location of the beginning of a data record, the location of the end of a data record, and the length of the header. The header may also include a number denoting the compression algorithm used, the uncompressed byte count for the data record or records, and the number of data records in a group of data records.

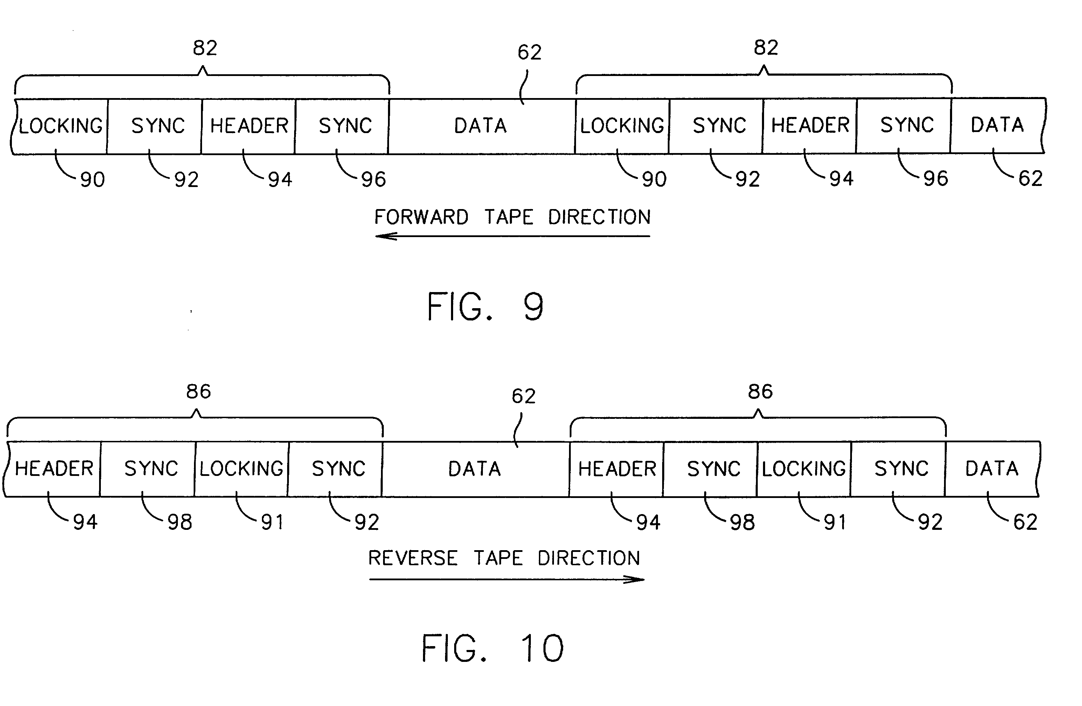

Referring to Figs. 9 and 10, for unidirectional recording a forward header 82 is recorded at the beginning of each data block 62 on one set of data tracks, the even numbered tracks for example, and a backward header 86 is recorded at the beginning of each data block 62 on the other set of tracks. Forward headers 82 are conventional headers configured so that the header information is read when tape 10 is moving forward, which is the direction tape 10 normally moves during read and write operations. Backward headers 86 identify the immediately downstream data blocks (in the forward direction) just like forward headers 82. Both the forward and backward headers are written when tape 10 is moving forward, which is right to left in Figs. 9 and 10. Forward headers 82 are read when tape 10 is moving forward (right to left). Backward headers 86 are read when tape 10 is moving backward (left to right). The headers containing search information positioned at intervals along tape 10 can be read in isolation to identify the selected data. Some of the headers are written backward so that magnetic head 20 can determine positional information in either direction of tape movement.

For multi-track serpentine recording, backward headers 86 are recorded by every other write element. For example, and referring also to Fig. 8, forward headers 82 are recorded on tracks 1 and 5 and backward headers 86 are recorded on tracks 3 and 7. Again, backward headers 86 identify the immediately downstream data blocks (in the forward direction) just like forward headers 82. Both the forward and backward headers are written when tape 10 is moving forward. Forward headers 82 are read when tape 10 is moving forward (right to left in Figs. 9 and 10). Backward headers 86 are read when tape 10 is moving backward (left to right in Figs. 9 and 10).

Each forward header 82 contains a locking field 90, a forward read synchronization pattern 92, then the header information 94 followed by another synchronization pattern 96. Synchronization pattern 92 marks the boundary between the locking fields and the header information. Each backward header 86 contains (in the order in which its is written) the header information 94, a backward read synchronization pattern 98, then a locking field 91 followed by another forward read synchronization pattern 92. Synchronization pattern 98 marks the boundary between the locking fields and the header information. Synchronization pattern 96 is a space filler. Therefore, any data that fills the same space as synchronization pattern 92 may be substituted for synchronization pattern 96.

Locking fields 90 and 91 are composed of any suitable pattern and/or time allocations that allow the read system to prepare for reading data. One common locking field is a phase locked loop (PLL) synchronization pattern that allows the PLL to attain lock. To conserve the area available for storing data, locking fields 90 and 91 may configured to operate as one shared locking field that is valid when tape 10 is moving forward or backward. The PLL synchronization pattern is one such constant frequency pattern that is valid in either direction of tape travel.

Header information 94 in backward headers 86 is generated in the same way and contains the same information as forward headers 82. Header information 94 in backward headers 86 may be written forward or backward depending on the configuration of controller 28. If controller 28 is configured to interpret the information in reverse order, then the header information in the backward headers is written forward so that it is read backward. If controller 28 is configured to interpret the information the same as the forward headers, then the header information in the backward headers is written backward so that it is read forward.

The invention may be implemented in firmware code imbedded in microprocessor 44 or memory 45 of controller 28, in an application specific integrated circuit, in the controller system software, or in the computer software. Although the invention has been shown and described with reference to the foregoing exemplary embodiments and manner of implementation, other forms and details may be made to the invention shown and described without departing from the spirit and scope of the invention as defined in the following claims.

## Claims

1. A memory device (44, 45 or 26) storing instructions that when executed cause a head (20) to read header information recorded on tape (10) when the tape (10) is moving backward.

2. A memory device (44, 45 or 26) storing instructions that when executed cause a head (20) to record header information on tape (10), the header information readable when the tape (10) is moving backward.

3. A memory device (44, 45 or 26) storing instructions that when executed cause a head (20) to record a first header (82) and a second header (86), the first header (82) readable when the tape (10) is moving forward and the second header (86) readable when the tape (10) is moving backward.

4. A memory device (44, 45 or 26) according to Claim 3, wherein the first header (82) is recorded on a first data track of the tape (10) and the second header (86) is recorded on a second data track of the tape (10), the first header (82) readable when the tape (10) is moving forward for the first data track and the second header (86) readable when the tape (10) is moving backward for the second data track.

5. A tape drive controller (28), comprising circuitry configured to cause a head (20) to read header information recorded on tape (10) when the tape (10) is moving backward.

6. A tape drive controller (28), comprising circuitry configured to cause a head (20) to record header information on tape (10), the header information readable when the tape (10) is moving backward.

7. A tape drive controller (28), comprising circuitry configured to cause a head (20) to record a first header (82) and a second header (86), the first header (82) readable when the tape (10) is moving forward and the second header (86) readable when the tape (10) is moving backward.

8. A tape drive controller (28) according to Claim 7, wherein the first header (82) is recorded on a first data track of the tape (10) and the second header (86) is recorded on a second data track of the tape (10), the first header (82) readable when the tape (10) is moving forward for the first data track and the second header (86) readable when the tape (10) is moving backward for the second data track.

9. A backward header, comprising data configured for recording on tape (10) so that the data can be read when the tape (10) is moving backward.

10. A system for locating data on tape having multiple data tracks, comprising a forward header (82) recorded on a first data track and a backward header (86) recorded on a second data track different from the first data track.
